# EUROPÄISCHE PATENTSCHRIFT

(11) **EP 0 696 608 B1**
(45) Veröffentlichungstag und Bekanntmachung des Hinweises auf die Patenterteilung: **11.12.1996**
(21) Anmeldenummer: 95111817.3
(22) Anmeldetag: 27.07.1995
(51) Int. Cl.: C08G 77/54, C08G 77/48, C08F 283/12

(54) **Organosilan- und Organopolysiloxan-Radikalinitiatoren und damit herstellbare Makromonomere und Pfropfcopolymerisate**
Organosilane and organopolysiloxane radical initiators and macromonomers and graft-copolymers prepared therefrom
Amorceurs radicalisés à structure organosilane et organopolysiloxane et macromonomères et copolymères greffés qu'on peut préparer à l'aide de ceux-ci

(30) Priorität: 28.07.1994 DE 4426832
(43) Veröffentlichungstag der Anmeldung: 14.02.1996
(73) Patentinhaber: Wacker-Chemie GmbH, D-81737 München (DE)
(72) Erfinder: Dauth, Jochen, Dr., D-84489 Burghausen (DE); Deubzer, Bernward, Dr., D-84489 Burghausen (DE); Nuyken, Oskar, Prof. Dr. Ing., D-81927 München (DE); Voit, Brigitte, Dr., D-80807 München (DE); Kollefrath, Ralf, D-85435 Erding (DE)
(74) Vertreter: Fritz, Helmut, Dr.

(56) Entgegenhaltungen:
- EP-A- 0 098 947
- EP-A- 0 539 901
- US-A- 4 826 954

## Beschreibung

Die Erfindung betrifft radikalbildende Gruppen aufweisende, in organischen Lösungsmitteln lösliche Organosilane und Organopolysiloxane, Verfahren zu deren Herstellung, Makromonomere und Pfropfcopolymerisate aus den erfindungsgemäßen Organosilanen und Organopolysiloxanen als Radikalinitiatoren und radikalisch polymerisierbaren organischen Monomeren, ein Verfahren zur Herstellung der Makromonomeren und Pfropfcopolymerisate und deren Verwendung.

Eine Möglichkeit der Herstellung von Pfropfcopolymeren besteht darin, ein Polymer, welches eine zur Reaktion befähigte funktionelle Endgruppe trägt, mit reaktiven Monomeren zu pfropfen. Dies wird als "grafting onto"-Verfahren bezeichnet. Beispielsweise in EP-A-539 901 werden Vinylmonomere nach dem Emulsionspolymerisationsverfahren auf ein emulgiertes, Anbindungsstellen aufweisendes Organopolysiloxan gepfropft. Die Anbindungsstellen werden durch in das Organopolysiloxan einkondensierte Dialkoxysilane, welche einen radikalbildenden Rest enthalten, erzeugt. Bei diesem "grafting onto"-Verfahren wird mittels eines externen Redox-Initiatorsystems die Homopolymerisation der Organomonomeren gestartet, die wachsenden Organopolymerketten binden hierbei an die Anbindungsstellen der Organopolysiloxan-Pfropfgrundlage an.

Ein offensichtlicher Nachteil dieses Verfahrens ist, daß die Anbindung des Organopolymers an das Organopolysiloxan nicht zwingend gegeben ist, und somit ein beträchtlicher Teil des Organopolymers nicht auf das Polysiloxan gepfropft wird, sondern als nicht angebundenes Homopolymerisat vorliegt. Weiterhin nachteilig am Verfahren des "grafting onto" ist, daß in Folge intramolekularer Verknüpfungen, insbesondere Verschlaufungen durch Mehrfachanbindung der Organopolymerkette am siliciumorganischen Polymerkern, unkontrolliert aufgebaute Pfropfcopolymere entstehen, was sich durch strukturelle Charakterisierung solcher Pfropfcopolymerer, z. B. mittels statischer und dynamischer Lichtstreuung, belegen läßt.

Es bestand die Aufgabe, Organosilane und Organopolysiloxane mit radikalbildenden Gruppen bereitzustellen, die auf einfache Weise und gut reproduzierbar hergestellt werden können und mit welchen durch eine radikalische Polymerisation Makromonomere und Pfropfcopolymerisate synthetisiert werden können, welche die obengenannten Nachteile der bekannten Pfropfcopolymerisate, nämlich hoher Anteil an Organopolymer-Homopolymerisat und unkontrollierter Aufbau, nicht aufweisen.

Die Erfindung betrifft radikalbildende Gruppen aufweisende Organosilane und Organopolysiloxane, aufgebaut aus
0,1 bis 100,0 Gew.-% Einheiten der allgemeinen Formel

   [RₐSi(O_{(3-a)/2})-R¹-(C₆H₍₄₋ₓ₎R⁵ ₓ)-N=N-S_{y}-R¹-R²] (1),
0 bis 80,0 Gew.-% Einheiten der allgemeinen Formel

   [R² ₃SiO_{1/2}] (2),
0 bis 99,9 Gew.-% Einheiten der allgemeinen Formel

   [R² ₂SiO_{2/2}] (3),
0 bis 80,0 Gew.-% Einheiten der allgemeinen Formel

   [R²SiO_{3/2}] (4)

   und
0 bis 80,0 Gew.-% Einheiten der allgemeinen Formel

   [SiO_{4/2}] (5),
wobei
- **R**: gleiche oder verschiedene Chlor- oder Bromatome, Hydroxylgruppen, C₁- bis C₁₈-Alkoxyreste, einwertige, gegebenenfalls durch Halogenatome, Aminogruppen, Hydroxylgruppen, Epoxyalkylreste oder Cyanogruppen substituierte C₁- bis C₁₈-Kohlenwasserstoffreste,
- **R**^{**1**}: eine chemische Bindung, gleiche oder verschiedene zweiwertige, gegebenenfalls durch Halogenatome, Aminogruppen, Hydroxylgruppen, Acyloxygruppen, Epoxyalkylreste oder Cyanogruppen substituierte C₁- bis C₁₈-Kohlenwasserstoffreste, welche durch zweibindige, beidseitig an Kohlenstoffatome gebundene Reste aus der Gruppe -O-, -S-, -COO-, -OOC-, -CONR²-, -NR²CO-, -NR²- und -CO- unterbrochen sein können,
- **R**^{**5**}: gleiche oder verschiedene Halogenatome, Cyanogruppen, Nitrogruppen, Reste -R, -OR oder -C(O)R,
- **R**^{**2**}: ein Wasserstoffatom oder einen Rest **R**, und
- **a**: die Werte 0, 1, 2 oder 3
- **x**: die Werte 0, 1 ,2, 3 oder 4 und
- **y**: die Werte 0 oder 1 bedeuten,
mit der Maßgabe, daß, wenn 100 Gew.-% Einheiten der Formel (I) vorhanden sind, a den Wert 3 bedeutet.

Beispiele für unsubstituierte Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl-und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest **R** sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest und Reste der Formeln 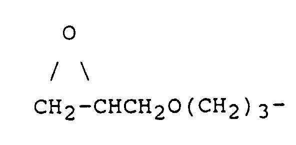 und HOCH₂CH(OH)CH₂SCH₂CH₂-.

Bei dem Rest R handelt es sich besonders bevorzugt um den Methyl-, Ethyl-, n-Propyl-, Vinyl-, 3-Norbornenyl-, n-5-Hexenyl-, Tolyl- und Phenylrest, insbesondere um den Methyl- und den Vinylrest. Wenn die allgemeine Formel (1) Organosilane beschreibt handelt es sich bei dem Rest R auch bevorzugt um Chloratome, Methoxy- und Ethoxygruppen.

In der allgemeinen Formel (1) kann die Azogruppe am Aromaten in ortho-, meta- oder para-Stellung gebunden sein.

Beispiele für Substituenten an den zweiwertigen Kohlenwasserstoffresten **R**^{**1**} sind Halogenatome, Cyanogruppen und C₁-C₆-Acyloxyreste. Beispiele für zweiwertige Kohlenwasserstoffreste **R**^{**1**} sind gesättigte, verzweigte oder unverzweigte Alkylenreste wie der Methylen- und Ethylenrest, sowie Propylen-, Butylen-, Pentylen-, 1-Methylpentylen-, Hexylen-, Cyclohexylen- und Octadecylenreste oder ungesättigte Alkylen- oder Arylenreste, wie der Hexenylenrest, Phenylenreste, wie der 2-Chlor-1,4-phenylenrest und insbesondere Reste der allgemeinen Formeln (6) bis (13)

-(CH₂)_{b}- (6)

-(CH₂)_{b}N(R³)-C(O)-(CH₂)_{b}- (7),

-(CH₂)_{b}-OC(O)-(CH₂)_{b}- (8),

-(CH₂)_{b}-O-CH₂-CH(OH)-(CH₂)-O-(CH₂)_{b} (9),

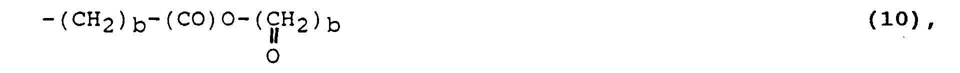

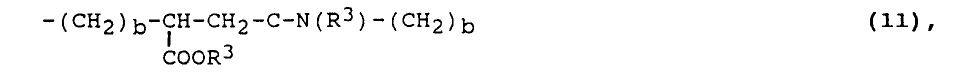

-(CH₂)_{b}-NH-C(O)O-(CH₂)_{b} (12),

-(CH₂)_{b}-S-C(O)-(CH₂)_{b}- (13),

in denen
- **R**^{**3**}: ein Wasserstoffatom oder gleiche oder verschiedene einwertige SiC-gebundene, gegebenenfalls substituierte C₁-C₆-Kohlenwasserstoffreste bedeutet und
- **b**: unabhängig voneinander eine ganze Zahl im Wert von 0 bis 6 bedeutet.

Bevorzugte Beispiele für endständige Gruppen -**R**^{**1**}-**R**^{**2**} sind Reste der Formeln -C(CN)₂CH₃, -C(CH₃)₂CN, -C(C₆H₅)₂Cl, -C(C₆H₅)₂OAc, -C(C₆H₅)CH₃Cl, -C(C₆H₅)CH₃OAc, -C₆H₅, und -S-C₆H₅.
- **x**: bedeutet vorzugsweise 0,1 oder 2.

Vorzugsweise enthalten die radikalbildende Gruppen aufweisenden Organopolysiloxane 0,5 bis 20,0 Gew.-%, insbesondere 1,0 bis 10,0 Gew.-% Einheiten der allgemeinen Formel (1).

Die radikalbildende Gruppen aufweisenden Organopolysiloxane können beispielsweise bis zu 90,0 Gew.-%, Einheiten der allgemeinen Formel (3) aufweisen, wenn die Organopolysiloxane als Cyclen vorliegen. Im allgemeinen enthalten die radikalbildende Gruppen aufweisenden Organopolysiloxane 20,0 bis 99,0 Gew.-%, insbesondere 50,0 bis 99,0 Gew.-% Einheiten der allgemeinen Formel (3).

In einer bevorzugten Ausführungsform weisen die radikalbildende Gruppen aufweisenden Organopolysiloxane mindestens 90,0 Gew.-%, insbesondere 95,0 Gew.-% Einheiten der allgemeinen Formel (3) auf, und die restlichen Einheiten sind Einheiten der allgemeinen Formeln (2) und (1), wobei **a** den Wert 1 hat. Diese Organopolysiloxane weisen eine lineare, kammartige Struktur auf. Die Anbindungsstellen an den Einheiten der allgemeinen Formel (1) sind besonders gut zugänglich für die Umsetzung mit radikalisch polymerisierbaren organischen Monomeren.

Die radikalbildende Gruppen aufweisenden Organopolysiloxane können beispielsweise auch aus mindestens 90,0 Gew.-%, Einheiten der allgemeinen Formeln (2), (4) und (5) bestehen. Es handelt sich dann um Harze. Vorzugsweise enthalten die radikalbildende Gruppen aufweisenden Organopolysiloxane höchstens 80,0 Gew.-%, insbesondere 50,0 Gew.-% und besonders bevorzugt höchstens 20,0 Gew.-% Einheiten der allgemeinen Formel (4) oder (5).

Die radikalbildende Gruppen aufweisenden Organopolysiloxane sind vorzugsweise lineare Organopolysiloxane oder Elastomere, die vorzugsweise als Reste **R**^{**2**} teilweise Wasserstoffatome, Methyl- oder Vinylreste enthalten.

Vorzugsweise sind in 100 ml Toluol bei 20°C mindestens 15 g, insbesondere 30 g der radikalbildende Gruppen aufweisenden Organopolysiloxane löslich. Die radikalbildende Gruppen aufweisenden Organopolysiloxane sind auch in anderen organischen Lösungsmitteln, wie Dioxan und Tetrahydrofuran (THF) gut löslich und sind deshalb sehr gut geeignet, um als Radikalmakroinitiatoren bei der Pfropfpolymerisation in Lösung eingesetzt zu werden.

Die mittleren Molmassen der radikalbildende Gruppen aufweisenden Organopolysiloxane liegen bevorzugt bei 10³ bis 10⁵ g/Mol, insbesondere 5·10³ bis 5·10⁴ g/Mol.

Gegenstand der Erfindung sind auch Verfahren zur Herstellung der radikalbildende Gruppen aufweisenden Organosilane und Organopolysiloxane.

### Verfahren 1)

Bei diesem Verfahren werden I) Organosilane und Organopolysiloxane, aufgebaut aus
0,1 bis 100,0 Gew.-% Einheiten der allgemeinen Formel

[RₐSi(O_{(3-a)/2})-A] (14),

und den vorstehend für die radikalbildende Gruppen aufweisenden Organosilane und Organopolysiloxane angegebenen Mengen an Einheiten der allgemeinen Formel (2) bis (5)
mit Verbindungen der allgemeinen Formel

B-(C₆H₍₄₋ₓ₎R⁵ ₓ)-N=N-S_{y}-R¹-R² (15),

umgesetzt, wobei
- **A**: gleiche oder verschiedene einwertige, eine Carbonsäureanhydrid-, Epoxidgruppe, eine Gruppe -COCl oder -NCO aufweisende, gegebenenfalls durch Halogenatome, Aminogruppen, Hydroxylgruppen, Epoxyalkylreste oder Cyanogruppen substituierte C₁- bis C₁₇-Kohlenwasserstoffreste, welche durch zweibindige, beidseitig an Kohlenstoffatome gebundene Reste aus der Gruppe -O-, -S-, -COO-, -OOC-, -CONR²-, -NR²CO-, -NR²- und -CO- unterbrochen sein können,
- **B**: Gruppen -(CH₂)_{**c**}OH, -(CH₂)_{**c**}NHR¹, -(CH₂)_{**c**}COOH, -(CH₂)_{**c**}SH,
- **c**: unabhängig voneinander eine ganze Zahl im Wert von 0 bis 10 bedeuten und
- **R**, **R**^{**5**}, **a**, **x**, **y**, **R**^{**1**} und **R**^{**2**}: die vorstehenden Bedeutungen aufweisen,
mit der Maßgabe, daß die Summe der Kohlenstoffatome in **A** und **B** höchstens 18 beträgt.

Ebenfalls Gegenstand der Erfindung ist II) ein entsprechendes Verfahren zur Herstellung der radikalbildende Gruppen aufweisenden Organosilane und Organopolysiloxane, wobei in den vorstehenden allgemeinen Formeln (14) und (15)
- **B**: eine Carbonsäureanhydrid-, Epoxidgruppe, eine Gruppe -COCl, -COOH oder -NCO, gleiche oder verschiedene einwertige, eine Carbonsäureanhydrid-, Epoxidgruppe, eine Gruppe -COCl oder -NCO aufweisende, gegebenenfalls durch Halogenatome, Aminogruppen, Hydroxylgruppen, Epoxyalkylreste oder Cyanogruppen substituierte C₁- bis C₁₇-Kohlenwasserstoffreste, welche durch zweibindige, beidseitig an Kohlenstoffatome gebundene Reste aus der Gruppe -O-, -S-, -COO-, -OOC-, -CONR²-, -NR²CO-, -NR²- und -CO- unterbrochen sein können,
- **A**: Gruppen -(CH₂)_{**c**}OH, -(CH₂)_{**c**}CH₂NHR¹, -(CH₂)_{**c**}CH₂COOH oder -(CH₂)_{**c**}CH₂SH bedeuten und
- **R**, **a**, **c**, **R**^{**1**} und **R**^{**2**}: die vorstehenden Bedeutungen aufweisen, mit der Maßgabe, daß die Summe der Kohlenstoffatome in **A** und **B** höchstens 18 beträgt.

Verfahren 1 wird vorzugsweise in den nachstehend bei Verfahren 2 angegebenen organischen Lösungsmitteln durchgeführt.

Wenn im Verfahren 1 in A oder B eine Gruppe -COCl vorhanden ist, wird die Umsetzung vorzugsweise in Gegenwart von Basen, wie Triethylamin oder Pyridin durchgeführt, um Chlorwasserstoff abzufangen.

### Verfahren 2)

Bei diesem Verfahren werden Organosilane oder Organopolysiloxane, aufgebaut aus
0,1 bis 100,0 Gew.-% Einheiten der allgemeinen Formel

[RₐSiH(O_{(3-a)/2})] (16),

und den vorstehend für die radikalbildende Gruppen aufweisenden Organosilane und Organopolysiloxane angegebenen Mengen an Einheiten der allgemeinen Formel (2) bis (5)
mit Verbindungen der allgemeinen Formel

R⁴-(C₆H₍₄₋ₓ₎R⁵ ₓ)-N=N-S_{y}-R¹-R² (17),

in Gegenwart von Platin, Rhodium oder deren Verbindungen umgesetzt, wobei
- **R**^{**4**}: gleiche oder verschiedene einwertige, eine olefinische Doppelbindung oder acetylenische Dreifachbindung aufweisenden, gegebenenfalls durch Halogenatome, Aminogruppen, Hydroxylgruppen, Acyloxygruppen, Epoxyalkylreste oder Cyanogruppen substituierte C₁- bis C₁₈-Kohlenwasserstoffreste, welche durch zweibindige, beidseitig an Kohlenstoffatome gebundene Reste aus der Gruppe -O-, -S-, -COO-, -OOC-, -CONR²-, -NR₂CO-, -NR₂- und -CO- unterbrochen sein können, bedeutet und
- **R**, **R**^{**5**}, **a**, **x**, **y**, **R**^{**1**} und **R**^{**2**}: die vorstehenden Bedeutungen aufweisen.

Für die vorstehende Umsetzung können alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z. B. PtCl₄, H₂PtCl₆∗6H₂O, Na₂PtCl₄∗4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆∗6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Katalysator wird vorzugsweise in Mengen von 0,5 bis 500 Gewichts-ppm (Gewichtsteilen je Million Gewichtsteilen), insbesondere 2 bis 400 Gewichts-ppm, jeweils berechnet als elementares Metall und bezogen auf das Gesamtgewicht der in der Reaktionsmischung vorliegenden, direkt an Siliciumatome gebundene Wasserstoffatome aufweisenden Silanen und/oder Siloxanen, eingesetzt.

Die genannte Umsetzung (nachfolgend Hydrosilylierung genannt) kann in Abwesenheit oder in Anwesenheit von Lösungsmittel erfolgen, wobei die Anwesenheit von Lösungsmittel bevorzugt ist.

Falls Lösungsmittel verwendet werden, sind Lösungsmittel oder Lösungsmittelgemische, welche unter den Reaktionsbedingungen weitgehend inert sind und insbesondere solche mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, Dimethylacetamid, Dimethylformamid, Dimethylsulfoxid, N-Methylpyrrolidon oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Die Hydrosilylierung kann beim Druck der umgebenden Atmosphäre, also etwa 0,1 MPa (abs.), sie kann auch bei höheren oder bei niedrigeren Drücken durchgeführt werden. Bevorzugt sind Drücke von 0,01 MPa (abs.) bis 1,0 MPa (abs.), insbesondere von 0,09 MPa (abs.) bis 0,11 MPa (abs.).

### Verfahren 3)

Bei diesem Verfahren wird eine Mischung aus den Komponenten
A) Organosilanen der allgemeinen Formel

   [RₐSi(O_{(3-a)/2})-R¹-(C₆H₍₄₋ₓ₎R⁵ ₓ)-N=N-S_{y}-R¹-R²] (1),
B) Organosiliciumverbindungen, die ausgewählt werden aus
   B1) Organosilanen der allgemeinen Formel

      R² _{d}Si(R⁶)_{(4-d)} (18)

      und
   B2) Organosiloxanen aus Einheiten der allgemeinen Formel

      R² ₑ(R⁶)_{f}SiO_{(4-e-f)/2}, (19),

      gegebenenfalls
C) mindestens 0,5 Mol Wasser pro Mol Alkoxygruppen, Chlor- oder Bromatomen in den Komponenten A und B und gegebenenfalls
D) mit Wasser mischbarem Lösungsmittel umgesetzt, wobei in den allgemeinen Formeln (18) und (19)
   - **R**^{**6**}: ein Chlor- oder Bromatom oder einen gegebenenfalls halogensubstituierten C₁-C₁₀-Alkoxyrest bedeutet,
   - **d**, **e** und **f**: jeweils die Werte 0, 1, 2 oder 3 bedeuten, und
   - **R**, **R**^{**1**}, **R**^{**2**} und **a**: die vorstehenden Bedeutungen aufweisen, mit der Maßgabe, daß Komponente B mindestens 0,01 Mol Alkoxygruppen oder Chlor- oder Bromatome pro Mol Siliciumatome aufweist.

Bei dem Rest **R**^{**5**} handelt es sich bevorzugt um C₁-C₆-Alkylgruppen, insbesondere um den Methyl-, Ethyl-, n-Propyl-, iso-Propyl- und Hexylrest, insbesondere um den Methyl- und Ethylrest.

Beispiele für im erfindungsgemäßen Verfahren eingesetzbare Organosilane B1 der allgemeinen Formel (18) sind Tetramethoxysilan, Tetraethoxysilan, Tetra-n-propoxysilan, Methyltrimethoxysilan, Vinyltrimethoxysilan, 3-Mercaptopropyltrimethoxysilan, 3-Chlorpropyltrimethoxysilan, Phenyltrimethoxysilan, o-, m-, p-Tolyltrimethoxysilan, Propyltrimethoxysilan, Methyltriethoxysilan, Vinyltriethoxysilan, Vinyldimethylethoxysilan, 3-Mercaptopropyltriethoxysilan, Propyltrimethoxysilan, Dimethyldiethoxysilan, Dimethyldimethoxysilan und Trimethylethoxysilan, wobei Tetraethoxysilan, Methyltrimethoxysilan, Dimethyldiethoxysilan, Vinyldimethylethoxysilan, Methyltriethoxysilan, Phenyltriethoxysilan, o-, m-, p-Tolyltriethoxysilan und Propyltriethoxysilan bevorzugt und Tetraethoxysilan besonders bevorzugt eingesetzt werden.

Die im erfindungsgemäßen Verfahren einsetzbaren Organosiloxane B2 weisen vorzugsweise höchstens 100 Einheiten der allgemeinen Formel (19) auf. Beispiele für Organosiloxane B2 sind lineare Organosiloxane, wie Disiloxane, beispielsweise Hexamethyldisiloxan, 1,3-Diphenyltetramethyldisiloxan, 1,3-Bis(n-5-hexenyl)tetramethyldisiloxan, 1,3-Divinyltetramethyldisiloxan, Polydimethylsiloxan, Polyphenylmethylsiloxan, α,ω-Hydroxypolydimethylsiloxan, vorzugsweise Hexamethyldisiloxan und 1,3-Divinyltetramethyldisiloxan und cyclische Organopolysiloxane aus 3 bis 8, vorzugsweise 4 oder 5 Einheiten der allgemeinen Formel (19), wie Hexamethylcyclotrisiloxan, Octamethylcyclotetrasiloxan und Dekamethylcyclopentasiloxan und Polysiloxane wie Polydimethylsiloxan und α,ω-Hydroxypolydimethylsiloxan.

Die Komponente B kann auch monomere und polymere Silikate enthalten. Dies ist insbesondere für die Herstellung von Harzen der Fall. Bevorzugte Silikate sind Methylorthosilikat, Ethylorthosilikat, Methylpolysilikat und Ethylpolysilikat, wobei die Silikate Alkoxyreste enthalten.

Der Gehalt an Alkoxygruppen oder Chlor- oder Bromatome der Komponente B beträgt vorzugsweise 0,5 - 2 Mol, insbesondere 0,65 - 1,5 Mol, pro Mol Siliciumatome.

Als Komponente C werden vorzugsweise mindestens 0,5 Mol, insbesondere 0,5 bis 0,8 Mol Wasser pro Mol Alkoxygruppen, Chlor- oder Bromatome der Komponenten A und B eingesetzt.

Als Komponente D werden vorzugsweise organische Lösungsmittel eingesetzt, die sich bei 20°C mit Wasser im Volumenverhältnis 1 : 1 homogen vermischen. Beispiele für als Komponente D geeignete Lösungsmittel sind einwertige und mehrwertige Alkohole, wie Methanol, Ethanol, n-Propanol, iso-Propanol und Ethylenglykol; Ether, wie Dioxan und Tetrahydrofuran; Amide, wie Dimethylformamid; Dimethylsulfoxid und Sulfolan oder Gemische dieser Lösungsmittel.

Besonders bevorzugt sind Lösungsmittel mit einem Siedepunkt bzw. Siedebereich von bis zu 120° C bei 0,1 MPa, insbesondere die vorstehenden einwertigen Alkohole.

Das Verfahren 3 wird vorzugsweise in Gegenwart eines an sich bekannten Katalysators durchgeführt. Beispiele für Katalysatoren sind insbesondere Schwefelsäure, Phosphorsäure, Trifluormethansulfonsäure, Eisen(II)-chlorid, Aluminiumchlorid, Bortrifluorid, Zinkchlorid, Kaolin, saure Zeolithe, sulfonierte Kohle, Alkalihydroxide, vorzugsweise Kalium- und Cäsiumhydroxid, Alkalialkoholate, quaternäre Ammoniumhydroxide, wie Tetramethylammoniumhydroxid, Benzyltrimethylammoniumhydroxid, Benzyltriethylammoniumhydroxid, Benzyltrimethylammoniumbutylat, β-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propyl-phosphoniumhydroxid, Alkalisiloxanolate und Ammoniumorganosiloxanolate, wie Benzyltrimethylammoniumethylsiloxanolat, und Phosphor-Stickstoff-Verbindungen, wie Phosphornitrilchlorid.

Vorzugsweise wird der Katalysator in Mengen von 0,1 bis 10 Gew.-%, bezogen auf die Summe aus Verbindungen der allgemeinen Formeln (1), (18) und (19) eingesetzt.

Vorzugsweise werden die vorstehenden Herstellungsverfahren 1 bis 3 bei Temperaturen von -10 °C bis 80 °C, insbesondere von 0 °C bis 60 °C durchgeführt. Vorzugsweise werden die vorstehenden Herstellungsverfahren unter Lichtausschluß durchgeführt. Vorzugsweise werden bei den vorstehenden Herstellungsverfahren alle flüchtigen Anteile und Salze nach der Synthese entfernt.

Die radikalbildende Gruppen aufweisenden Organosilane und Organopolysiloxane, werden vorzugsweise als Radikalinitiatoren für die Darstellung von Makromonomeren und Pfropfcopolymerisaten von ethylenisch ungesättigten organischen Monomeren eingesetzt.

Ein weiterer Gegenstand der Erfindung ist ein Verfahren zur Herstellung von Makromonomeren und Pfropfcopolymerisaten, bei dem
95 bis 1 Gew.-% der vorstehenden radikalbildende Gruppen aufweisenden Organosilane und Organopolysiloxane mit
1 bis 95 Gew.-% an ethylenisch ungesättigte Monomeren
umgesetzt werden.

Ein Makromonomer ist ein endständiges mindestens monofunktionelles reaktives Polymer. Die hier aus einem Organosilan aufgebauten Makromonomere können zu den Pfropfcopolymerisaten kondensiert oder equilibriert werden.

Bei dem Pfropfcopolymerisationsverfahren trägt die zu pfropfende Pfropfgrundlage eine reaktive Gruppierung, die mit dem zur Pfropfung zugesetzten Monomer reagiert. Dieses Verfahren wird als "grafting from"-Verfahren bezeichnet. Bei einem Start der Polymerisation wachsen die Pfropfäste direkt auf die Pfropfgrundlage auf, so daß sich gezielt und kontrollierbar Pfropfcopolymere und Makromonomere mit definierter Struktur aufbauen lassen.

Die radikalbildende Gruppen aufweisenden Organosilane und Organopolysiloxane können durch Erwärmen oder Bestrahlen aktiviert werden. Dabei wird Stickstoff eliminiert und es entsteht ein Radikalpaar. Das am Organopolysiloxan gebundene Arylradikal dient als reaktive Anbindungsstelle für die ethylenisch ungesättigte Monomeren. Das zweite, bei der Aktivierung vom Organosilan oder Organopolysiloxan abgespaltene Radikal ist so stabil, daß es die Monomeren nur in sehr geringem Maße polymerisieren kann. Deshalb entsteht ein erheblich niedrigerer Anteil an freiem Organopolymer-Homopolymerisat als bei Pfropfverfahren nach der "grafting onto"-Methode.

Das Verfahren zur Herstellung von Makromonomeren und Pfropfcopolymerisaten, kann in Substanz oder in Gegenwart organischer Lösungsmittel oder in Emulsion durchgeführt werden, wobei die radikalbildende Gruppen aufweisenden Organosilane und Organopolysiloxane, teilweise oder vollständig gelöst sein können. Vorzugsweise werden als Lösungsmittel Ether, wie Tetrahydrofuran und Dioxan oder Kohlenwasserstoffe, wie Toluol eingesetzt. Organische Lösungsmittel werden vorzugsweise in der 0- bis 10-fachen Gewichtsmenge, insbesondere in der 1- bis 3-fachen Menge der radikalbildende Gruppen aufweisenden Organosilane und Organopolysiloxane eingesetzt.

Die erfindungsgemäßen Organosilane und Organopolysiloxane können gegebenenfalls zusammen mit Lösungsmittel vorgelegt werden. Alle Komponenten des Verfahrens können aber auch vermischt werden, bevor der Radikalmakroinitiator aktiviert wird.

Die Umsetzung findet vorzugsweise unter Ausschluß von Feuchtigkeit und Sauerstoff statt. Die Reaktionsmischung wird vorzugsweise 10 bis 90 Minuten mit Inertgas, wie Stickstoff oder Argon gesättigt, der pH-Wert sollte vorzugsweise 7 - 9 betragen, bevor der Radikalinitiator aktiviert wird.

Die Pfropfung auf die Radikalinitiatoren wird vorzugsweise durch Temperaturerhöhung auf 40 - 100°C, bevorzugt 60 - 85°C, gestartet. Die Pfropfung kann auch durch UV-Bestrahlung mit einer Quecksilber- oder Quecksilber/Xenon-Lampe bis zu 24 Stunden erfolgen.

Vorzugsweise werden ethylenisch ungesättigte organische Monomere in einer Menge zudosiert, die 20 - 80 Gew.-%, bezogen auf das Gesamtgewicht des Pfropfcopolymerisats, beträgt. Als Monomere für den organischen Polymeranteil werden vorzugsweise Acrylsäure, Methacrylsäure, Acrylsäureester oder Methacrylsäureester von aliphatischen Alkoholen und Diolen mit 1 - 10 C-Atomen, Acrylnitril, Styrol, p-Methylstyrol, Vinylacetat, Vinylpropionat, Maleinimid, Vinylpyrrolidon, Vinylchlorid, Ethylen, Butadien, Isopren und Chloropren eingesetzt. Besonders bevorzugt sind Styrol sowie Acrylsäureester und Methacrylsäureester von aliphatischen Alkoholen mit 1 - 4 C-Atomen, beispielsweise Methyl(meth)-acrylat, Ethyl(meth)acrylat oder Butyl(meth)acrylat, Ethylenglykoldi(meth)acrylat und Ethylen, sowie Butadien. Als organischer Polymeranteil sind sowohl Homopolymerisate als auch Mischpolymerisate der genannten Monomere geeignet. Die Pfropfpolymerisation mit Monomeren, welche zwei ethylenische Doppelbindungen enthalten führt zu vernetzten Pfropfpolymerisaten.

Zur vollständigen Polymerisation wird die Starttemperatur für 30 Minuten bis 8 Stunden, bevorzugt 1 - 2 Stunden, beibehalten. Restmengen an nichtumgesetztem Organomonomer können anschließend durch Destillation, gegebenenfalls gemeinsam mit dem Lösungsmittel entfernt werden, was bevorzugt ist. Die Isolierung der Makromonomeren und Pfropfcopolymerisate aus der Lösung, sowie die Entfernung von Restmengen an nichtumgesetztem Organomonomer erfolgt vorzugsweise durch Fällung in polaren Lösungsmitteln, wie Ethanol, Methanol oder Wasser oder durch andere bekannte Aufreinigungsmethoden. Bei den Makromonomeren und Pfropfcopolymerisaten handelt es sich um nahezu farblose Öle oder Feststoffe.

Ein weiterer Gegenstand der Erfindung sind die nach dem vorstehenden Verfahren erhältlichen Makromonomeren und Pfropfcopolymerisate.

Die Molmassen der erfindungsgemäßen Pfropfcopolymerisate liegen bevorzugt bei 10⁴ bis 10⁷ g/Mol, insbesondere 5·10⁴ bis 5·10⁵ g/Mol.

Die nach dem vorstehenden Verfahren hergestellten Makromonomeren und Pfropfcopolymerisate weisen einen definierten Aufbau durch gezielte Anbindung der Organopolymerketten an die Siliconpfropfgrundlage auf. Die Makromonomeren und Pfropfcopolymerisate sind in organischen Lösungsmitteln, insbesondere in den zur Pfropfpolymerisationen geeigneten Lösungsmitteln gut löslich und thermoplastisch verarbeitbar.

Die erfindungsgemäßen Makromonomeren und Pfropfcopolymerisate eignen sich vor allem zur Anwendung als modifizierte Thermoplaste, zur Verwendung als Verträglichkeitsvermittler für siliciumhaltige Polymerblends oder als Siliconbestandteil in Polymerblends. Als organischer Polymeranteil in den Thermoplasten und als organischer Polymerbestandteil in den Polymerblends sind sowohl Homopolymerisate als auch Mischpolymerisate der vorstehend genannten Monomere geeignet.

Zur Herstellung der Blends werden die erfindungsgemäßen Pfropfcopolymerisate in Mengen von 0,5 - 50 Gew.-%, vorzugsweise 3 - 10 Gew.-%, jeweils bezogen auf das Gesamtgewicht des Blends mit den beiden korrespondierenden Homopolymeren extrudiert oder einem Schmelzpressvorgang unterzogen. Die Verhältnisse der Homopolymeren zueinander, können dabei beliebig variieren. Besonders bevorzugt werden Kombinationen aus ungesättigten Ethylen-Propylen-Copolymeren (EPDM) und Siliconpolymeren. Durch die Modifikation von Kautschuken mit Siliconpolymeren wird die gute Hitzebeständigkeit und Kälteflexibilität der Silicone mit den guten mechanischen Eigenschaften der Kautschuke vereint.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .

Die nachstehenden Akkürzungen wurden verwendet:
- d.Th. =: der Theorie
- p.A. =: zur Analyse
- konz =: konzentriert
- GPC =: Gelpermeationschromatographie
- RI =: Brechungsindex
- THF =: Tetrahydrofuran
- MMA =: Methacrylsäuremethylester
- PMMA =: Polymethacrylsäuremethylester
- Mn =: Zahlenmittel
- Mw =: Gewichtsmittel

### Beispiele

**Organopolysiloxan-Radikalmakroinitiatoren**

### Beispiel 1:

### Synthese von 3-Acylchlorophenylazoethan-1,1-dinitril (Azo I)

6,31 g (4.6 x 10⁻² mol) 3-Aminobenzoesäure, gelöst in einer Mischung aus 100 ml Wasser und 13 ml konz. Salzsäure, gekühlt auf 0°C, werden mit 60 g Eis versetzt (L1). 3.22 g (4.6 x 10⁻² mol) Natriumnitrit in 50 ml Wasser werden auf 0°C gekühlt (L2). 3,55 g (4.4 x 10⁻² mol) Methylmalonsäuredinitril in 60 ml Ethanol, gemischt mit einer Lösung von 43,9 g (0,54 mol) Natriumacetat in 100 ml Wasser, werden auf 0° C gekühlt (L4). L1 wird zur L2 zugetropft, wobei die Temperatur nicht über 0°C steigen darf. Diese Suspension (L3) tropft man zu L4, ebenfalls unter Eiskühlung. Man rührt 1 h bei 0°C und anschließend 30 min bei RT gerührt. Im Schütteltrichter wird der Ansatz mit Diethylether überschichtet, die wäßrige Phase mit konzentrierter HCl angesäuert und geschüttelt. Es wird solange Säure zugegeben, bis sich die Azoverbindung vollständig in der Etherphase löst. Die organische Phase wird isoliert, mit Wasser gewaschen, über Magnesiumsulfat getrocknet. Das Lösungsmittel wird anschließend abdestilliert und das Produkt, 3-Carboxyphenylazoethan-1,1-dinitril im Vakuum getrocknet.

Ausbeute: 5,63g (56% d. Th.) an 3-Carboxyphenylazoethan-1,1-dinitril.

15.0 g (6.6 x 10⁻² mol) 3-Carboxyphenylazoethan-1, 1-dinitril werden in 500 ml trockenem Toluol gelöst und auf 0°C gekühlt. Dem Gemisch werden 13.7 g (6.6 x 10⁻² mol) Phosphorpentachlorid, gelöst in 20 ml Methylenchlorid, langsam zugetropft, so daß die Reaktionstemperatur nicht über 4°C steigt. Die Reaktionsmischung wird anschließend 3 Stunden bei Raumtemperatur gerührt. Unter Zusatz von 2 1 Hexan kristallisiert das Produkt über Nacht bei -20°C aus, wird unter Schutzgas abgesaugt und im Vakuum getrocknet.
Ausbeute: 10.3 g (63 %) (Azo I)

### Beispiel 2:

### Synthese von 4-Hydroxymethylphenylazoethan-1,1-dinitril (Azo II)

11,31 g (0.092 mol) 3-Aminobenzylalkohol (L1) werden in 100 ml Wasser mit 13 ml HCl (konz.) gelöst und auf 0°C gekühlt. 6.44 g (0.092 mol) Natriumnitrit wird in 50 ml Wasser gelöst (L2) und eisgekühlt. L2 wird zu L1 langsam zugetropft, so daß die Reaktionstemperatur 0°C nicht übersteigt (L3). In der Zwischenzeit werden 7.1 g (0.091 mol) Methylmalonodinitril und 87.7 g (1.07 mol) Natriumacetat in 100 ml Wasser gelöst (L4). L3 wird sehr schnell zu L4 zugegeben. Die Reaktionslösung wird 45 min bei Raumtemperatur gerührt und anschließend 5 x mit Ether ausgeschüttelt. Die vereinigten Etherphasen werden über Aluminiumoxid filtriert, über Magnesiumsulfat getrocknet und das Lösungsmittel wird abdestilliert. Das Produkt wird in wenig Methylenchlorid (1 Teil) gelöst und mit 4 - 5 Teilen Pentan versetzt. Ein öliges Nebenprodukt wird abdekantiert. Die Lösung wird eingeengt und das zurückbleibende gelbe Produkt im Vakuum getrocknet.
Ausbeute: 6 g (30%)

### Beispiel 3:

### Synthese von Amid aus Azo I und N-Cyclohexylaminopropyldimethoxymethylsilan (Azo III)

12,3 g (0,05 mol) N-Cyclohexylamino-propyl-dimethoxymethylsilan und 13 g (0,11 mol) Trimethylmethoxysilan werden vorgelegt. Unter ständigem Rühren tropft man eine Lösung von 22 mg (5,5 x 10⁻⁴ mol) Natriumhydroxid in 4 ml Wasser zu. Die entstandene Emulsion wird eine Stunde bei 60 °C temperiert, wobei eine klare Lösung entsteht. Alle leichtflüchtigen Verbindungen werden unter Normaldruck bei 100 °C abdestilliert. Der Rückstand wird mit 6 ml 20 %iger wäßriger Salzsäure 4 Stunden unter Rückfuß erhitzt, die nicht wäßrige Phase abgetrennt, zweimal mit Wasser gewaschen und bei 1 mbar destilliert (Siedepunkt 120 - 121 °C). Ausbeute: 5,53 g (31 % d. Th.)

Zu 1 g (2,8 x 10⁻³ mol) des oben dargestellten Bis[trimethylsiloxy]-N-cyclohexylamino-propyl- methylsilanes, gelöst in 20 ml THF und auf 0 °C gekühlt, werden 0,68 g (2,8 x 10⁻³ mol) Azo I, wie in Beispiel 1 beschrieben und 0,28 g (2,8 x 10⁻³ mol) Triethylamin zugetropft. Die Reaktionsmischung wird 1 Stunde gerührt. Feste Bestandteile werden abfiltriert und das Filtrat im Vakuum eingeengt. Der Rückstand wird in 50 ml Diethylether aufgenommen und zweimal mit 30 ml Wasser gewaschen. Die organische Phase wird abgetrennt, über Natriumsulfat getrocknet und das Lösungsmittel im Hochvakuum bei Raumtemperatur bis zur Gewichtskonstanz entfernt. Man erhält 1,19 g (70 % d. Th.) eines gelben Öls.

### Beispiel 4:

### Synthese von Radikalmakroinitiator (RM/1) aus Azo I

5.0 g eines N-Methylaminopropyl-funktionalisierten Polydimethylsiloxans (2.6 x 10⁻³ mol an -NHCH₃, Molmasse Mn = 15300) werden in 30 ml trockenem THF gelöst. Dazu werden 0.36 ml (0.26 g, 2.6 x 10⁻³ mol) Triethylamin und eine Lösung von 0.64 g (2.6 x 10⁻³ mol) Azo I in trockenem THF zugetropft. Die Mischung wird über Nacht gerührt, das Lösungsmittel bei 35°C im Vakuum zur Hälfte abgezogen und der Rückstand einer 2:1-Mischung aus Methanol und Wasser zugetropft. Die entstandene Emulsion wird eine Stunde gerührt, zweimal mit je 100 ml Diethylether ausgeschüttelt, die vereinigten Etherphasen mit 100 ml 3%iger NaOH-Lösung und 100 ml Wasser gewaschen, getrocknet und der Ether am Rotationsverdampfer bei 35°C abdestilliert. Das zähe, gelbgefärbte, ölige Produkt wird im Hochvakuum von weiterem Ether befreit.
Ausbeute: 4.7 g (85% d.Th.)

### Beispiel 5:

### Synthese von Radikalmakroinitiator (RM/2) aus Azo I

20 g eines N-Cyclohexylaminopropyl-funktionalisiertem Polydimethylsiloxans (1.3 x 10⁻² mol NH-Cyclohexyl-Funktion, Molmasse Mn = 15800 g/mol) und das Säurechlorid Azo I (3.21 g, 1.3 x 10⁻² mol) werden in je 50 ml trockenem THF gelöst. Zur Siloxanlösung gibt man 1.33 g (1.3 x 10⁻² mol) Triethylamin, kühlt auf ca. 10°C und tropft unter Rühren die Säurechloridlösung zu. Die Mischung läßt man noch eine weitere Stunde bei 10°C rühren, zieht das Lösungsmittel im Vakuum zur Hälfte ab und tropft den Rückstand in 800 ml Methanol. Die Emulsion wird eine Stunde gerührt, das Produkt über Nacht sedimentiert, in THF aufgenommen, mit MgSO₄ getrocknet und im Vakuum vom Lösungsmittel befreit.
Ausbeute: 14.3 g (62%)

### Beispiel 6:

### Synthese von Radikalmakroinitiator (RM/3) aus Azo I

8 g eines N-Cyclohexylaminopropyl-funktionalisierten Polydimethylsiloxans (2 x 10⁻³ mol NH-Cyclohexyl-Funktion, Molmasse Mn = 15,500 g/mol) und 0,5 g Säurechlorid Azo I (2 x 10⁻³ mol) werden in je 50 ml trockenem THF gelöst. Zur Siloxanlösung gibt man 0,21 g (2 x 10⁻³ mol) Triethylamin, kühlt auf ca. 10°C und tropft langsam unter Rühren die Säurechloridlösung zu. Die Mischung läßt man noch eine weitere Stunde bei 10°C rühren, zieht das Lösungsmittel im Vakuum zur Hälfte ab und tropft den Rückstand in 800 ml Methanol. Die Emulsion wird eine Stunde gerührt, das Produkt über Nacht sedimentiert, in THF aufgenommen, mit MgSO₄ getrocknet und im Vakuum vom Lösungsmittel befreit.
Ausbeute: 5,3 g (62 %); Molmasse (GPC, THF als Eluent, Polystyrol-Eichung, RI-Detektor): Mn = 28,300 Mw = 33,700 g/ml

### Beispiel 7

### Synthese von Radikalmakroinitiator (RM/3) aus Azo II

5.25 g unbehandeltes Aluminiumoxidpulver (Korngröße 150 mesh, 58 A) werden mit 20 ml Ether (absolut) und 0.21 g (1 mmol) Azo II 10 min gerührt. Nach Zugabe von 3.88 g eines mit Glycidoxygruppen funktionalisierten Polydimethylsiloxans (1 mmol an Epoxyfunktion, Molmasse = 12600 g/mol), wird weitere 16 h gerührt. Die Reaktionslösung wird filtriert und das Lösungsmittel im Vakuum abdestilliert. Das Produkt wird als blaßgelbes Öl erhalten.
Ausbeute 1.1 g (27 %)

### Beispiel 8:

### Synthese von 3-Vinylphenylazoethan-1,1-dinitril (Azo IV)

1.19 g (0.01 mol) 3-Aminostyrol werden in 30 ml Wasser und 5 ml konz. Salzsäure gelöst und mit 30 g Eis versetzt. Bei 0°C wird mit einer eisgekühlten Lösung aus 0.7 g (0.01 ml) NaNO₂ in 20 ml Wasser diazotiert und sodann die filtrierte Diazoniumsalzlösung bei 0-5°C zu einer Lösung aus 0.8 g (0.01 mol) Methylmalonodinitril und 10 g (0.12 mol) Natriumacetat in 15 ml Ethanol und 25 ml Wasser zugetropft. Nach 30-minütigem Rühren bei Raumtemperatur wird die Azoverbindung mit Ether extrahiert. Nach säulenchromatographischer Reinigung (70 g SiO₂ + 10% H₂O, Petrolether (100 ml)/Ether (3 ml)) fällt die Substanz als gelber Feststoff an.
Ausbeute: 1,8 g (85% d. Th.)

### Beispiel 9:

### Synthese von Radikalmakroinitiator RM/5

2,0 g (9,5 mmol) 3-Vinylphenylazoethan-1,1-dinitril und 2,88 g eines Polyhydrogenmethylsiloxanes mit einem Wasserstoffgehalt von 1,6 Gew.-% (entspricht 4,75 x 10⁻² mol HSi-Einheiten) und der Viskosität von 83 mPas bei 25 °C werden gemischt und sodann mit 1,44 mg eines Divinyltetramethyldisiloxanplatinkomplexes mit 17 Gew.-% Platin versetzt, so daß die Gesamtmischung 50 ppm Platin (bezogen auf reines Metall) enthält. Anschließend werden noch 5 ml Toluol zugegeben. Die Reaktionslösung wird 16 Stunden bei 45 °C gerührt. Nach zwei Stunden Reaktionszeit werden nochmals 1,44 mg des o. g. Katalysators zugegeben. Nach Reaktionsende wird die Lösung langsam in Methanol getropft, wobei ein gelbes Produkt präzipitiert. Der Feststoff wird abfiltriert und im Hochvakuum bis zur Gewichtskonstanz getrocknet. Man erhält 4,7 g (Ausbeute: 96 % d. Th.) eines gelben Pulvers.

### Beispiel 10:

### Synthese von Radikalmakroinitiator RM/6

0,5 g (9,5 x 10⁻⁴ mol) Azo III, wie in Beispiel 3 beschrieben, werden mit 2,47 g eines α,ω-Hydroxypolydimethylsiloxanes der Viskosität 100 mPas bei 25 °C und 10 mg (3,9 x 10⁻⁵ mol) Tetrabutylammoniumhydroxid versetzt. Dei Reaktionsmischung wird 24 Stunden bei 45 °C gerührt. Nach dem Abkühlen auf Raumtemperatur wird das Produkt in 50 ml Diethylether aufgenommen und zweimal mit je 30 ml Wasser ausgeschüttelt. Die organische Phase wird abgetrennt, mit Natriumsulfat getrocknet und im Hochvakuum bei 30 °C bis zur Gewichtskonstanz eingeengt. Man erhält 2,4 g (Ausbeute: 80 % d. Th.) eines transparenten, gelben Öles.

### Beispiel 11 a

### Pfropfcopolymerisation von RM/1 mit MMA im Verhältnis 1:3.9 durch Thermolyse (PC1)

1 g RM/1 (4.6 x 10⁻⁴ mol Azofunktionalität) und 3.9 g (1.8 x 10⁻³ mol) MMA werden in 50 ml Toluol gelöst. Die Reaktionsmischung wird sorgfältig entgast und anschließend 16 h bei 70°C erhitzt. Nach dem Erkalten wird die Lösung in 800 ml Methanol gefällt. Das ausgefallene Pfropfcopolymer wird abfiltriert und im Vakuum getrocknet.
Ausbeute 3.5 g (61 %)
Molmasse (GPC, THF als Eluent, Polystyrol-Eichung, RI-Detektor): Mn = 65300, Mw = 179100 g/mol

### Beispiel 11 b

### Pfropfcopolymerisation von RM/2 mit MMA im Verhältnis 1:1 (PC1b)

7.5 g RM/2 (4.9 x 10⁻³ mol Azofunktionalität) und 7.5 g MMA (7.5 x 10⁻² mol) werden in 70 ml Toluol gelöst. Die Reaktionsmischung wird sorgfältig entgast und anschließend 16 h bei 75°C erhitzt. Nach dem Erkalten wird die Lösung in 800 ml Methanol gefällt. Das ausgefallene Produkt wird abfiltriert und im Vakuum getrocknet.
Ausbeute: 5.3 g (35%)
Molmasse (GPC, THF als Eluent, Polystyrol-Eichung, RI-Detektor): Mn = 19100, Mw = 30300 g/mol

### Beispiel 11 c

### Pfropfcopolymerisation von RM/2 mit MMA im Verhältnis 1:10 (PC1c)

1,36 g RM/2 (8,9 x 10⁻⁴ mol Azofunktionalität) und 13,64 g MMA (1,36 x 10⁻² mol) werden in 70 ml Toluol gelöst. Die Reaktionsmischung wird sorgfältig entgast und anschließend 16 h bei 75°C erhitzt. Nach dem Erkalten wird die Lösung in 800 ml Methanol gefällt. Das ausgefallene Produkt wird abfiltriert und im Vakuum getrocknet.
Ausbeute: 11,5 g (76 %)
Molmasse (GPC, THF als Eluent, Polystyrol-Eichung, RI-Detektor): Mn = 61,700, Mw = 114,700 g/mol

### Beispiel 11 d:

### Pfropfcopolymerisation von RM/4 mit MMA im Verhältnis 1:5 (PC1d)

1 g RM/4 (2,4 x 10⁻⁴ mol Azofunktionalität) und 5 g MMA (5 x 10⁻² mol) werden in 70 ml Toluol gelöst. Die Reaktionsmischung wird sorgfältig entgast und anschließend 16 h bei 75°C erhitzt. Nach dem Erkalten wird die Lösung in 800 ml Methanol gefällt. Das ausgefallene Produkt wird abfiltriert und im Vakuum getrocknet.
Ausbeute: 4,81 g (80 %)
Molmasse (GPC, THF als Eluent, Polystyrol-Eichung, RI-Detektor): Mn = 77200, Mw = 137,100 g/mol

### Beispiel 12:

### Pfropfcopolymerisation von RM/2 mit Styrol im Verhältnis 1:5 (PC2)

1 g RM/2 (6,5 x 10⁻⁴ mol Azofunktionalität) und 5 g Styrol (4,8 x 10⁻² mol) werden in 70 ml Toluol gelöst. Die Reaktionsmischung wird sorgfältig entgast und anschließend 16 h bei 90°C erhitzt. Nach dem Erkalten wird die Lösung in 800 ml Methanol gefällt. Das ausgefallene Produkt wird abfiltriert und im Vakuum getrocknet.
Ausbeute: 3,9 g (65 %)
Molmasse (GPC, THF als Eluent, Polystyrol-Eichung, RI-Detektor): Mn = 7,600, Mw = 19,300 g/mol

### Beispiel 13:

### Pfropfcopolymerisation von RM/2 mit MMA im Verhältnis 1:5 durch Photolyse (PC3)

0,19 g RM/2 (1,2 x 10⁻⁴ mol Azofunktionalität) und 0,94 g MMA (9,4 x 10⁻³ mol) werden in 3 ml Toluol gelöst. Die Reaktionsmischung wird sorgfältig entgast und anschließend in einer Quarzküvette unter Schutzgas 6 h bei 25°C mit einer Hg-Xe-Hochdrucklampe (Lampenleistung = 200 W, Leistung an der Probe: 100 W/cm²) belichtet. Nach dem Belichten wird die Lösung in 20 ml Methanol gefällt. Das ausgefallene Produkt wird abfiltriert und im Vakuum getrocknet.
Ausbeute: 0,4 g (35 %)
Molmasse (GPC, THF als Eluent, Polystyrol-Eichung, RI-Detektor): Mn = 16,100, Mw = 23,800 g/mol

### Beispiel 14:

### PMMA/Siliconöl-Blend unter Zusatz von PC1c

1 g Polydimethylsiloxan (Mn = 312,000, Mw = 540,000), 9 g PMMA (Mn = 30,200, Mw = 50,000) und 0,3 g PC1c werden in 30 ml Toluol gelöst. Aus der Lösung werden Filme gegossen und diese 10 Tage bei Raumtemperatur und anschließend 2 Tage bei 40°C getrocknet. Diese Filme zeigen verbesserte mechanische Eigenschaften im Vergleich zu Filmen aus 10 % Polydimethylsiloxan und 90 % PMMA ohne Zusatz von PC1c.

## Patentansprüche

1. Radikalbildende Gruppen aufweisende Organosilane und Organopolysiloxane, aufgebaut aus
0,1 bis 100,0 Gew.-% Einheiten der allgemeinen Formel
[RₐSi(O_{(3-a)/2})-R¹-(C₆H₍₄₋ₓ₎R⁵ ₓ)-N=N-S_{y}-R¹-R²] (1),
0 bis 80,0 Gew.-% Einheiten der allgemeinen Formel
[R² ₃SiO_{1/2}] (2),
0 bis 99,9 Gew.-% Einheiten der allgemeinen Formel
[R² ₂SiO_{2/2}] (3),
0 bis 80,0 Gew.-% Einheiten der allgemeinen Formel
[R²SiO_{3/2}] (4)
und
0 bis 80,0 Gew.-% Einheiten der allgemeinen Formel
[SiO_{4/2}] (5),
wobei
**R** gleiche oder verschiedene Chlor- oder Bromatome, Hydroxylgruppen, C₁- bis C₁₈-Alkoxyreste, einwertige, gegebenenfalls durch Halogenatome, Aminogruppen, Hydroxylgruppen, Epoxyalkylreste oder Cyanogruppen substituierte C₁- bis C₁₈-Kohlenwasserstoffreste,
**R**^{**1**} eine chemische Bindung, gleiche oder verschiedene zweiwertige, gegebenenfalls durch Halogenatome, Aminogruppen, Hydroxylgruppen, Acyloxygruppen, Epoxyalkylreste oder Cyanogruppen substituierte C₁- bis C₁₈-Kohlenwasserstoffreste, welche durch zweibindige, beidseitig an Kohlenstoffatome gebundene Reste aus der Gruppe -O-, -S-, -COO-, -OOC-, -CONR²-, -NR²CO-, -NR²- und -CO- unterbrochen sein können,
**R**^{**5**} gleiche oder verschiedene Halogenatome, Cyanogruppen, Nitrogruppen, Reste -R, -OR oder -C(O)R,
**R**^{**2**} ein Wasserstoffatom oder einen Rest **R**, und
**a** die Werte 0, 1, 2 oder 3
**x** die Werte 0, 1 ,2, 3 oder 4 und
**y** die Werte 0 oder 1 bedeuten,
mit der Maßgabe, daß, wenn 100 Gew.-% Einheiten der Formel (I) vorhanden sind, a den Wert 3 bedeutet.

2. Verfahren zur Herstellung von radikalbildende Gruppen aufweisenden Organosilanen und Organopolysiloxanen gemäß Anspruch 1, bei dem Organosilane und Organopolysiloxane, aufgebaut aus
0,1 bis 100,0 Gew.-% Einheiten der allgemeinen Formel
[RₐSi(O_{(3-a)/2})-A] (14),
und den im Anspruch 1 für die radikalbildende Gruppen aufweisenden Organosilane und Organopolysiloxane angegebenen Mengen an Einheiten der allgemeinen Formel (2) bis (5)
mit Verbindungen der allgemeinen Formel
B-(C₆H₍₄₋ₓ₎R⁵ ₓ)-N=N-S_{y}-R¹-R² (15),
umgesetzt werden, wobei
**A** gleiche oder verschiedene einwertige, eine Carbonsäureanhydrid-, Epoxidgruppe, eine Gruppe -COCl, oder -NCO aufweisende, gegebenenfalls durch Halogenatome, Aminogruppen, Hydroxylgruppen, Epoxyalkylreste oder Cyanogruppen substituierte C₁- bis C₁₇-Kohlenwasserstoffreste, welche durch zweibindige, beidseitig an Kohlenstoffatome gebundene Reste aus der Gruppe -O-, -S-, -COO-, -OOC-, -CONR²-, -NR²CO-, -NR²- und -CO- unterbrochen sein können,
**B** Gruppen -(CH₂)_{**c**}OH, -(CH₂)_{**c**}NHR¹, -(CH₂)_{**c**}CH₂COOH, (CH₂)_{**c**}SH,
**c** unabhängig voneinander eine ganze Zahl im Wert von 0 bis 10 bedeuten und
**R**, **R**^{**5**}, **a**, **x**, **y**, **R**^{**1**} und **R**^{**2**} die im Anspruch 1 angegebenen Bedeutungen aufweisen,
mit der Maßgabe, daß die Summe der Kohlenstoffatome in **A** und **B** höchstens 18 beträgt.

3. Verfahren zur Herstellung von radikalbildende Gruppen aufweisenden Organosilanen und Organopolysiloxanen gemäß Anspruch 1, wobei in den vorstehenden allgemeinen Formeln (14) und (15)
**B** eine Carbonsäureanhydrid-, Epoxidgruppe, eine Gruppe -COCl, -COOH oder -NCO, gleiche oder verschiedene einwertige, eine Carbonsäureanhydrid-, Epoxidgruppe, eine Gruppe -COCl oder -NCO aufweisende, gegebenenfalls durch Halogenatome, Aminogruppen, Hydroxylgruppen, Epoxyalkylreste oder Cyanogruppen substituierte C₁- bis C₁₇-Kohlenwasserstoffreste, welche durch zweibindige, beidseitig an Kohlenstoffatome gebundene Reste aus der Gruppe -O-, -S-, -COO-, -OOC-, -CONR²-, -NR²CO-, -NR²- und -CO- unterbrochen sein können,
**A** Gruppen -(CH₂)_{**c**}OH, -(CH₂)_{**c**}CH₂NHR¹, -(CH₂)_{**c**}COOH oder -(CH₂)_{**c**}CH₂SH bedeuten und
**R**, **a**, **c**, **R**^{**1**} und **R**^{**2**} die in den Ansprüchen 1 und 2 angegebenen Bedeutungen aufweisen, mit der Maßgabe, daß die Summe der Kohlenstoffatome in **A** und **B** höchstens 18 beträgt.

4. Verfahren zur Herstellung von radikalbildende Gruppen aufweisenden Organosilanen und Organopolysiloxanen gemäß Anspruch 1, bei dem Organosilane oder Organopolysiloxane, aufgebaut aus
0,1 bis 100,0 Gew.-% Einheiten der allgemeinen Formel
[RₐSiH(O_{(3-a)/2})] (16),
und den im Anspruch 1 für die radikalbildende Gruppen aufweisenden Organosilane und Organopolysiloxane angegebenen Mengen an Einheiten der allgemeinen Formel (2) bis (5)
mit Verbindungen der allgemeinen Formel
R⁴-(C₆H₍₄₋ₓ₎R⁵ ₓ)-N=N-S_{y}-R¹-R² (17),
in Gegenwart von Platin, Rhodium oder deren Verbindungen umgesetzt werden, wobei
**R**^{**4**} gleiche oder verschiedene einwertige, eine olefinische Doppelbindung oder acetylenische Dreifachbindung aufweisenden, gegebenenfalls durch Halogenatome, Aminogruppen, Hydroxylgruppen, Acyloxygruppen, Epoxyalkylreste oder Cyanogruppen substituierte C₁- bis C₁₈-Kohlenwasserstoffreste, welche durch zweibindige, beidseitig an Kohlenstoffatome gebundene Reste aus der Gruppe -O-, -S-, -COO-, -OOC-, -CONR²-, -NR₂CO-, -NR₂- und -CO- unterbrochen sein können, bedeutet und
**R**, **R**^{**5**}, **a**, **x**, **y**, **R**^{**1**} und **R**^{**2**} die im Anspruch 1 angegebenen Bedeutungen aufweisen.

5. Verfahren zur Herstellung von radikalbildende Gruppen aufweisenden Organosilanen und Organopolysiloxanen gemäß Anspruch 1,
bei dem eine Mischung aus den Komponenten
A) Organosilanen der allgemeinen Formel
[RₐSi(O_{(3-a)/2})-R¹-(C₆H₍₄₋ₓ₎R⁵ ₓ)-N=N-S_{y}-R¹-R²] (1),
B) Organosiliciumverbindungen, die ausgewählt werden aus
B1) Organosilanen der allgemeinen Formel
R² _{d}Si(R⁶)_{(4-d)} (18)
und
B2) Organosiloxanen aus Einheiten der allgemeinen Formel
R² ₑ(R⁶)_{f}SiO_{(4-e-f)/2}, (19),
gegebenenfalls
C) mindestens 0,5 Mol Wasser pro Mol Alkoxygruppen, Chlor- oder Bromatomen in den Komponenten A und B und gegebenenfalls
D) mit Wasser mischbarem Lösungsmittel umgesetzt werden, wobei in den allgemeinen Formeln (18) und (19)
**R**^{**6**} ein Chlor- oder Bromatom oder einen gegebenenfalls halogensubstituierten C₁-C₁₀-Alkoxyrest bedeutet,
**d**, **e** und **f** jeweils die Werte 0, 1, 2 oder 3 bedeuten, und
**R**, **R**^{**1**}, **R**^{**2**} und **a** die im Anspruch 1 angegebenen Bedeutungen aufweisen, mit der Maßgabe, daß Komponente B mindestens 0,01 Mol Alkoxygruppen Chlor- oder Bromatome pro Mol Siliciumatome aufweist.

6. Verfahren zur Herstellung von Makromonomeren und Pfropfcopolymerisaten, bei dem
95 bis 1 Gew.-% der radikalbildende Gruppen aufweisenden Organosilane und Organopolysiloxane gemäß Anspruch 1 mit
1 bis 95 Gew.-% an ethylenisch ungesättigte Monomeren umgesetzt werden.

7. Makromonomere und Pfropfcopolymerisate, erhältlich nach dem Verfahren gemäß Anspruch 6.

8. Verwendung der Makromonomeren und Pfropfcopolymerisate gemäß Anspruch 7 als modifizierte Thermoplaste, als Verträglichkeitsvermittler für siliciumhaltige Polymerblends oder als Siliconbestandteil in Polymerblends.

## Claims

1. Organosilanes and organopolysiloxanes containing groups which form free radicals and being built up from
0.1 to 100.0% by weight of units of the general formula
[RₐSi(O_{(3-a)/2})-R¹-(C₆H₍₄₋ₓ₎R⁵ ₓ)-N=N-S_{y}-R¹-R²] (1),
0 to 80.0% by weight of units of the general formula
[R² ₃SiO_{1/2}] (2),
0 to 99.9% by weight of units of the general formula
[R² ₂SiO_{2/2}] (3),
0 to 80.0% by weight of units of the general formula
[R²SiO_{3/2}] (4)
and
0 to 80.0% by weight of units of the general formula
[SiO_{4/2}] (5),
in which
R is identical or different chlorine or bromine atoms, hydroxyl groups, C₁- to C₁₈-alkoxy radicals, or monovalent C₁- to C₁₈-hydrocarbon radicals which are optionally substituted by halogen atoms, amino groups, hydroxyl groups, epoxy alkyl radicals or cyano groups,
R¹ is a chemical bond, or identical or different divalent C₁- to C₁₈-hydrocarbon radicals which are optionally substituted by halogen atoms, amino groups, hydroxyl groups, acyloxy groups, epoxyalkyl radicals or cyano groups and can be interrupted by divalent radicals, bonded to carbon atoms on both sides, from the group consisting of -O-, -S-, -COO-, -OOC-, -CONR²-, -NR²CO-, -NR²- and -CO-,
R⁵ is identical or different halogen atoms, cyano groups, nitro groups, or radicals -R, -OR or -C(O)R,
R² is a hydrogen atom or a radical R and
a has the values 0, 1, 2 or 3,
x has the values 0, 1, 2, 3 or 4 and
y has the values 0 or 1,
with the proviso that if 100% by weight of units of the formula (I) are present, a has the value 3.

2. Process for the preparation of organosilanes and organopolysiloxanes containing groups which form free radicals according to Claim 1, in which organosilanes and organopolysiloxanes built up from
0.1 to 100.0% by weight of units of the general formula
[RₐSi(O_{(3-a)/2})-A] (14),
and the amounts of units of the general formulae (2) to (5) stated in Claim 1 for the organosilanes and organopolysiloxanes containing groups which form free radicals, are reacted with compounds of the general formula
B-(C₆H₍₄₋ₓ₎R⁵ ₓ)-N=N-S_{y}-R¹-R² (15),
in which
A is identical or different monovalent C₁- to C₁₇-hydrocarbon radicals which contain a carboxylic acid anhydride or epoxide group or a group -COCl or -NCO and are optionally substituted by halogen atoms, amino groups, hydroxyl groups, epoxyalkyl radicals or cyano groups, and can be interrupted by divalent radicals, bonded to carbon atoms on both sides, from the group consisting of -O-, -S-, -COO-, -OOC-, -CONR²-, -NR²CO-, -NR²- and -CO-,
B is the groups -(CH₂)_{c}OH, - (CH₂)_{c}NHR¹, -(CH₂)_{c}CH₂COOH, (CH₂)_{c}SH,
c is at each occurrence, independently of one another, an integer having a value from 0 to 10 and
R, R⁵, a, x, y, R¹ and R² have the meanings stated in Claim 1,
with the proviso that the sum of the carbon atoms in A and B is not more than 18.

3. Process for the preparation of organosilanes and organopolysiloxanes containing groups which form free radicals according to Claim 1, in which, in the above general formulae (14) and (15),
B is a carboxylic acid anhydride or epoxide group, a group -COCl, -COOH or -NCO, or identical or different monovalent C₁- to C₁₇-hydrocarbon radicals which contain a carboxylic acid anhydride or epoxide group or a group -COCl or -NCO and are optionally substituted by halogen atoms, amino groups, hydroxyl groups, epoxyalkyl radicals or cyano groups, and can be interrupted by divalent radicals, bonded to carbon atoms on both sides, from the group consisting of -O-, -S-, -COO-, -OOC-, -CONR²-, -NR²CO-, -NR²- and -CO-,
A is the groups -(CH₂)_{c}OH, - (CH₂)_{c}CH₂NHR¹, -(CH₂)_{c}COOH or -(CH₂)_{c}CH₂SH and
R, a, c, R¹ and R² have the meanings stated in Claims 1 and 2,
with the proviso that the sum of the carbon atoms in A and B is not more than 18.

4. Process for the preparation of organosilanes and organopolysiloxanes containing groups which form free radicals according to Claim 1, in which organosilanes or organopolysiloxanes built up from
0.1 to 100.0% by weight of units of the general formula
[RₐSiH(O_{(3-a)/2})] (16),
and the amounts of units of the general formulae (2) to (5) stated in Claim 1 for the organosilanes and organopolysiloxanes containing groups which form free radicals, are reacted in the presence of platinum, rhodium or compounds thereof with compounds of the general formula
R⁴-(C₆H₍₄₋ₓ₎R⁵ ₓ)-N=N-S_{y}-R¹-R² (17),
in which
R⁴ is identical or different monovalent C₁- to C₁₈-hydrocarbon radicals which contain an olefinic double bond or acetylenic triple bond and are optionally substituted by halogen atoms, amino groups, hydroxyl groups, acyloxy groups, epoxyalkyl radicals or cyano groups, and can be interrupted by divalent radicals, bonded to carbon atoms on both sides, from the group consisting of -O-, -S-, -COO-, -OOC-, -CONR²-, -NR²CO-, -NR²- and -CO-, and
R, R⁵, a, x, y, R¹ and R² have the meanings stated in Claim 1.

5. Process for the preparation of organosilanes and organopolysiloxanes containing groups which form free radicals according to Claim 1,
in which a mixture of the components
A) organosilanes of the general formula
[RₐSi(O_{(3-a)/2})-R¹-(C₆H₍₄₋ₓ₎R⁵ ₓ)-N=N-S_{y}-R¹-R²] (1),
B) organosilicon compounds which are chosen from
B1) organosilanes of the general formula
R² _{d}Si(R⁶)_{(4-d)} (18)
and
B2) organosiloxanes of units of the general formula
R² ₑ(R⁶)_{f}SiO_{(4-e-f)/2'} (19),
if appropriate
c) at least 0.5 mol of water per mole of alkoxy groups, chlorine atoms or bromine atoms in components A and B and if appropriate
D) a water-miscible solvent, is reacted,
in which, in the general formulae (18) and (19),
R⁶ is a chlorine or bromine atom or an optionally halogen-substituted C₁-C₁₀-alkoxy radical,
d, e and f in each case have the values 0, 1, 2 or 3 and R, R¹, R² and a the meanings stated in Claim 1,
with the proviso that component B contains at least 0.01 mol of alkoxy groups or chlorine or bromine atoms per mole of silicon atoms.

6. Process for the preparation of macromonomers and graft copolymers, in which
95 to 1% by weight of the organosilanes and organopolysiloxanes containing groups which form free radicals according to Claim 1
are reacted with
1 to 95% by'weight of ethylenically unsaturated monomers.

7. Macromonomers and graft copolymers obtainable the process according to Claim 6.

8. Use of the macromonomers and graft copolymers according to Claim 7 as modified thermoplastics, as compatibility mediators for silicon-containing polymer blends or as the silicone constituent in polymer blends.

## Revendications

1. Organosilanes et organopolysiloxanes contenant des groupes formant des radicaux libres, composés de
0,1 à 100,0% en poids de motifs de formule générale
[RₐSi(O_{(3-a)/2})-R¹-(C₆H₍₄₋ₓ₎R⁵ ₓ)-N=N-S_{y}-R¹-R²] (1),
0 à 80,0% en poids de motifs de formule générale
[R² ₃SiO_{1/2}] (2),
0 à 99,9% en poids de motifs de formule générale
[R² ₂SiO_{2/2}] (3),
0 à 80,0% en poids de motifs de formule générale
[R²SiO_{3/2}] (4)
et
0 à 80,0% en poids de motifs de formule générale
[SiO_{4/2}] (5),
dans lesquelles
R représente des atomes de chlore ou de brome, des groupes hydroxyle, des radicaux alkoxy en C₁-C₁₈, identiques ou différents, des radicaux hydrocarbure en C₁-C₁₈ monovalents, identiques ou différents, éventuellement substitués par des atomes d'halogène, des groupes amino, des groupes hydroxyle, des radicaux époxyalkyle ou des groupes cyano,
R¹ représente une liaison chimique, des radicaux hydrocarbure en C₁-C₁₈ bivalents, identiques ou différents, éventuellement substitués par des atomes d'halogène, des groupes amino, des groupes hydroxyle, des groupes acyloxy, des radicaux époxyalkyle ou des groupes cyano, et qui peuvent être interrompus par des radicaux bivalents liés des deux côtés à des atomes de carbone, parmi les groupes -O-, -S-, -COO-, -OOC-, -CONR²-, -NR²CO-, -NR²- et -CO-,
R⁵ représente des atomes d'halogène, des groupes cyano, des groupes nitro, des radicaux -R, -OR ou -C(O)R, identiques ou différents,
R² représente un atome d'hydrogène ou un radical R, et
a a les valeurs 0, 1, 2 ou 3
x a les valeurs 0, 1, 2, 3 ou 4 et
y a les valeurs 0 ou 1,
avec la condition que, si 100% en poids des motifs de formule (I) sont présents, a a la valeur 3.

2. Procédé de préparation d'organosilanes et d'organopolysiloxanes contenant des groupes formant des radicaux libres selon la revendication 1, dans lequel on fait réagir des organosilanes et des organopolysiloxanes, composés de
0,1 à 100,0% en poids de motifs de formule générale
[RₐSi(O_{(3-a)/2})-A] (14),
et des quantités de motifs de formules générales (2) à (5), indiquées à la revendication 1 pour les organosilanes et les organopolysiloxanes contenant des groupes formant des radicaux libres avec des composés de formule générale
B-(C₆H₍₄₋ₓ₎R⁵ ₓ)-N=N-S_{y}-R¹-R² (15),
dans lesquelles formules
A représente des radicaux hydrocarbure en C₁-C₁₇ monovalents, identiques ou différents, contenant un groupe anhydride d'acide carboxylique, un groupe époxyde, un groupe -COCl ou -NCO, éventuellement substitués par des atomes d'halogène, des groupes amino, des groupes hydroxyle, des radicaux époxyalkyle ou des groupes cyano, et qui peuvent être interrompus par des radicaux bivalents liés des deux côtés à des atomes de carbone, parmi les groupes -O-, -S-, -COO-, -OOC-, -CONR²-, -NR²CO-, -NR²- et -CO-,
B représente des groupes -(CH₂)_{c}OH, -(CH₂)_{c}NHR¹, -(CH₂)_{c}CH₂COOH, (CH₂)_{c}SH,
c est, indépendamment l'un de l'autre, un nombre entier ayant une valeur de 0 à 10 et
R, R⁵, a, x, y, R¹ et R² ont les significations indiquées à la revendication 1,
avec la condition que la somme des atomes de carbone dans A et B s'élève au maximum à 18.

3. Procédé de préparation d'organosilanes et d'organopolysiloxanes contenant des groupes formant des radicaux libres selon la revendication 1, dans lequel, dans les formules générales (14) et (15) ci-dessus
B représente un groupe anhydride d'acide carboxylique, un groupe époxyde, un groupe -COCl, -COOH ou -NCO, des radicaux hydrocarbure en C₁-C₁₇ monovalents, identiques ou différents, contenant un groupe anhydride d'acide carboxylique, un groupe époxyde, un groupe -COCl, ou -NCO, éventuellement substitués par des atomes d'halogène, des groupes amino, des groupes hydroxyle, des radicaux époxyalkyle ou des groupes cyano, et qui peuvent être interrompus par des radicaux bivalents liés des deux côtés à des atomes de carbone, parmi les groupes -O-, -S-, -COO-, -OOC-, -CONR²-, -NR²CO-, -NR²- et -CO-,
A représente des groupes -(CH₂)_{c}OH, -(CH₂)_{c}CH₂NHR¹, -(CH₂)_{c}COOH ou (CH₂)_{c}CH₂SH et
R, a, c, R¹ et R² ont les significations indiquées aux revendications 1 et 2,
avec la condition que la somme des atomes de carbone dans A et B s'élève au maximum à 18.

4. Procédé de préparation d'organosilanes et d'organopolysiloxanes contenant des groupes formant des radicaux libres selon la revendication 1, dans lequel on fait réagir des organosilanes ou des organopolysiloxanes, composés de
0,1 à 100,0% en poids de motifs de formule générale
[RₐSiH(O_{(3-a)/2})] (16),
et des quantités de motifs de formules générales (2) à (5), indiquées à la revendication 1 pour les organosilanes et les organopolysiloxanes contenant des groupes formant des radicaux libres avec des composés de formule générale
R⁴-(C₆H₍₄₋ₓ₎R⁵ ₓ)-N=N-S_{y}-R¹-R² (17),
en présence de platine, de rhodium ou de composés de ceux-ci
dans lesquelles formules
R⁴ représente des radicaux hydrocarbure en C₁-C₁₈ monovalents, identiques ou différents, contenant une double liaison oléfinique ou une triple liaison acétylénique, éventuellement substitués par des atomes d'halogène, des groupes amino, des groupes hydroxyle, des groupes acyloxy, des radicaux époxyalkyle ou des groupes cyano, et qui peuvent être interrompus par des radicaux bivalents liés des deux côtés à des atomes de carbone, parmi le groupe -O-, -S-, -COO-, -OOC-, -CONR²-, -NR²CO-, -NR²- et -CO-, et
R, R⁵, a, x, y, R¹ et R² ont les significations indiquées à la revendication 1.

5. Procédé de préparation d'organosilanes et d'organopolysiloxanes contenant des groupes formant des radicaux libres selon la revendication 1,
dans lequel on fait réagir un mélange des composants
A) organosilanes de formule générale
[RₐSi(O_{(3-a)/2})-R¹-(C₆H₍₄₋ₓ₎R⁵ ₓ)-N=N-S_{y}-R¹-R²] (1),
B) composés organosiliciés, choisis parmi
B1) des organosilanes de formule générale
R² _{d}Si(R⁶)_{(4-d)} (18)
et
B2) des organosiloxanes constitués de motifs de formule générale
R² ₑ(R⁶)_{f}SiO_{(4-a-f)/2}, (19),
éventuellement
C) au moins 0,5 mole d'eau par mole de groupes alkoxy, d'atomes de chlore ou de brome dans les composants A et B et éventuellement
D) avec un solvant miscible à l'eau,
où dans les formules générales (18) et (19),
R⁶ représente un atome de chlore ou de brome ou un radical alkoxy en C₁-C₁₀ éventuellement substitué par un halogène,
d, e et f ont chaque fois les valeurs 0, 1, 2 ou 3 et
R, R¹, R² et a ont les significations indiquées à la revendication 1,
avec la condition que le composant B contienne au moins 0,01 mole de groupes alkoxy, d'atomes de chlore ou de brome par mole d'atomes de silicium.

6. Procédé de préparation de macromonomères et de copolymères greffés, dans lequel on fait réagir
95 à 1% en poids des organosilanes et des organopolysiloxanes contenant des groupes formant des radicaux libres selon la revendication 1 avec
1 à 95% en poids de monomères éthyléniquement insaturés.

7. Macromonomère et copolymère greffé, pouvant être obtenus d'après le procédé selon la revendication 6.

8. Mise en oeuvre des macromonomères et des copolymères greffés selon la revendication 7 en tant que thermoplastiques modifiés, en tant que médiateurs de compatibilité pour des mélanges de polymères contenant du silicium ou en tant que constituant silicone dans des mélanges de polymères.
